# EUROPEAN PATENT APPLICATION

(11) **EP 4 432 568 A1**
(43) Date of publication of application: **18.09.2024**
(21) Application number: 22903015.0
(22) Date of filing: 17.10.2022
(51) Int. Cl.: H04B 1/14, H04W 88/08

(54) **METHOD FOR ENSURING OPERATION RELIABILITY OF RADIO UNIT AND COMMUNICATION APPARATUS**

(30) Priority: 06.12.2021 CN 202111511585
(71) Applicant: Huawei Technologies Co., Ltd., Shenzhen, Guangdong 518129 (CN)
(72) Inventor: QU, Jianping, Shenzhen, Guangdong 518129 (CN)
(74) Representative: Gill Jennings & Every LLP
(86) International application number: PCT/CN2022/125697
(87) International publication number: WO 2023/103591

(57) **Abstract**

This application provides a method for ensuring operation reliability of a radio frequency unit and a communication apparatus. The method includes: A distributed unit receives state information from the radio frequency unit, where the state information includes at least one of CPU usage of the radio frequency unit, a temperature of the radio frequency unit, and temperature difference information of the radio frequency unit. The distributed unit adjusts, based on the state information, a parameter of the radio frequency unit and/or a parameter of an antenna corresponding to the radio frequency unit. In this solution, the distributed unit may dynamically adjust the parameter of the radio frequency unit based on the state information of the radio frequency unit, to ensure normal operation of the radio frequency unit. This helps avoid occurrence of excessively heavy load, an excessively high temperature, and an excessively large temperature difference, so that data discarding is not caused. Therefore, operation reliability of the radio frequency unit can be ensured without affecting quality of service.

## Description

This application claims priority to Chinese Patent Application No. 202111511585.X, filed with the China National Intellectual Property Administration on December 6, 2021 and entitled "METHOD FOR ENSURING OPERATION RELIABILITY OF RADIO FREQUENCY UNIT AND COMMUNICATION APPARATUS", which is incorporated herein by reference in its entirety.

### TECHNICAL FIELD

This application relates to the field of communication technologies, and in particular, to a method for ensuring operation reliability of a radio frequency unit and a communication apparatus.

### BACKGROUND

When system load of a radio frequency unit is excessively heavy, a device temperature of the radio frequency unit is excessively high, or a device temperature difference of the radio frequency unit is excessively large due to reasons such as a large quantity of services, the radio frequency unit starts reliability protection, for example, discards data, to protect reliability of the radio frequency unit.

However, discarding data by the radio frequency unit triggers data retransmission. Consequently, data transmission efficiency is low, and quality of service is affected.

### SUMMARY

Embodiments of this application provide a method for ensuring operation reliability of a radio frequency unit and a communication apparatus, to ensure operation reliability of the radio frequency unit without affecting quality of service.

According to a first aspect, an embodiment of this application provides a method for ensuring operation reliability of a radio frequency unit. The method may be performed by a distributed unit or a module (for example, a chip) used in a distributed unit. The method includes: receiving state information from the radio frequency unit, where the state information includes at least one of CPU usage of the radio frequency unit, a temperature of the radio frequency unit, and temperature difference information of the radio frequency unit; and adjusting, based on the state information, a parameter of the radio frequency unit and/or a parameter of an antenna corresponding to the radio frequency unit.

According to the foregoing solution, the distributed unit may dynamically adjust the parameter of the radio frequency unit based on the state information of the radio frequency unit, to ensure normal operation of the radio frequency unit. This helps avoid occurrence of excessively heavy load, an excessively high temperature, and an excessively large temperature difference, so that data discarding is not caused. Therefore, operation reliability of the radio frequency unit can be ensured without affecting quality of service.

In a possible implementation method, the adjusting, based on the state information, a parameter of the radio frequency unit and/or a parameter of an antenna corresponding to the radio frequency unit includes: if the state information satisfies a preset condition, adjusting the parameter of the radio frequency unit and/or the parameter of the antenna corresponding to the radio frequency unit.

In a possible implementation method, the preset condition includes one or more of the following: The CPU usage is greater than a CPU usage threshold, the temperature is greater than a temperature threshold, and a temperature difference corresponding to the temperature difference information is greater than a temperature difference threshold.

In a possible implementation method, the parameter of the radio frequency unit includes a quantity of resource blocks of the radio frequency unit; and the adjusting a parameter of the radio frequency unit includes: reducing the quantity of resource blocks of the radio frequency unit.

According to this solution, load, a temperature, or a temperature difference of the radio frequency unit can be quickly reduced, and the operation reliability of the radio frequency unit can be ensured without affecting the quality of service.

In a possible implementation method, the parameter of the radio frequency unit includes transmit power of a power amplification module of the radio frequency unit; and the adjusting a parameter of the radio frequency unit includes: reducing the transmit power of the power amplification module of the radio frequency unit.

According to this solution, the load, the temperature, or the temperature difference of the radio frequency unit can be quickly reduced, and the operation reliability of the radio frequency unit can be ensured without affecting the quality of service.

In a possible implementation method, the parameter of the antenna includes a weight value of the antenna; and the adjusting a parameter of an antenna corresponding to the radio frequency unit includes: adjusting the weight value of the antenna, where an adjusted weight value of the antenna is used for reducing transmit power of a power amplification module corresponding to the antenna. The power amplification module is a power amplification module corresponding to the antenna in the radio frequency unit.

According to this solution, the load, the temperature, or the temperature difference of the radio frequency unit can be quickly reduced, and the operation reliability of the radio frequency unit can be ensured without affecting the quality of service.

In a possible implementation method, the adjusting a parameter of the radio frequency unit and/or a parameter of an antenna corresponding to the radio frequency unit includes: determining the parameter of the radio frequency unit, and sending the determined parameter of the radio frequency unit to the radio frequency unit; and/or determining the parameter of the antenna corresponding to the radio frequency unit, and sending, to the radio frequency unit, the determined parameter of the antenna corresponding to the radio frequency unit.

In a possible implementation method, the method further includes: receiving indication information from the radio frequency unit, where the indication information indicates to adjust the parameter of the radio frequency unit and/or the parameter of the antenna corresponding to the radio frequency unit.

According to a second aspect, an embodiment of this application provides a method for ensuring operation reliability of a radio frequency unit. The method may be performed by the radio frequency unit or a module (for example, a chip) used in the radio frequency unit. The method includes: sending state information of the radio frequency unit to a distributed unit, where the state information includes at least one of CPU usage of the radio frequency unit, a temperature of the radio frequency unit, and temperature difference information of the radio frequency unit; and receiving, from the distributed unit, a parameter of the radio frequency unit and/or a parameter of an antenna corresponding to the radio frequency unit, where the parameter of the radio frequency unit is determined based on the state information, and the parameter of the antenna corresponding to the radio frequency unit is determined based on the state information.

According to the foregoing solution, the radio frequency unit may send the state information of the radio frequency unit to the distributed unit, so that the distributed unit may dynamically adjust the parameter of the radio frequency unit based on the state information, to ensure normal operation of the radio frequency unit. This helps avoid occurrence of excessively heavy load, an excessively high temperature, and an excessively large temperature difference, so that data discarding is not caused. Therefore, operation reliability of the radio frequency unit can be ensured without affecting quality of service.

In a possible implementation method, before the sending state information of the radio frequency unit to a distributed unit, the method further includes: obtaining the state information.

In a possible implementation method, the method further includes: sending, to the distributed unit, at least one of a CPU usage threshold corresponding to the CPU usage, a temperature threshold corresponding to the temperature, or a temperature difference threshold corresponding to the temperature difference information.

In a possible implementation method, the method further includes: sending indication information to the distributed unit, where the indication information indicates to adjust the parameter of the radio frequency unit and/or the parameter of the antenna corresponding to the radio frequency unit.

According to a third aspect, an embodiment of this application provides a method for ensuring operation reliability of a radio frequency unit. The method may be performed by a distributed unit or a module (for example, a chip) used in a distributed unit. The method includes: receiving an adjustment reference value from the radio frequency unit, where the adjustment reference value is an adjustment proportion or an adjustment amount, the adjustment reference value is determined based on state information of the radio frequency unit, and the state information includes at least one of CPU usage of the radio frequency unit, a temperature of the radio frequency unit, and temperature difference information of the radio frequency unit; and adjusting, based on the adjustment reference value, a parameter of the radio frequency unit and/or a parameter of an antenna corresponding to the radio frequency unit.

According to the foregoing solution, the distributed unit may dynamically adjust the parameter of the radio frequency unit based on the adjustment reference value, to ensure normal operation of the radio frequency unit. This helps avoid occurrence of excessively heavy load, an excessively high temperature, and an excessively large temperature difference, so that data discarding is not caused. Therefore, operation reliability of the radio frequency unit can be ensured without affecting quality of service.

In a possible implementation method, the adjusting, based on the adjustment reference value, a parameter of the radio frequency unit includes: reducing a quantity of resource blocks of the radio frequency unit based on the adjustment reference value; and/or reducing transmit power of a power amplification module of the radio frequency unit based on the adjustment reference value.

According to this solution, load, a temperature, or a temperature difference of the radio frequency unit can be quickly reduced, and the operation reliability of the radio frequency unit can be ensured without affecting the quality of service.

In a possible implementation method, the adjusting, based on the adjustment reference value, a parameter of an antenna corresponding to the radio frequency unit includes: adjusting a weight value of the antenna based on the adjustment reference value, where an adjusted weight value of the antenna is used for reducing transmit power of a power amplification module corresponding to the antenna.

According to this solution, the load, the temperature, or the temperature difference of the radio frequency unit can be quickly reduced, and the operation reliability of the radio frequency unit can be ensured without affecting the quality of service.

In a possible implementation method, the method further includes: receiving indication information from the radio frequency unit, where the indication information indicates to adjust the parameter of the radio frequency unit and/or the parameter of the antenna corresponding to the radio frequency unit.

In a possible implementation method, the adjusting a parameter of the radio frequency unit and/or a parameter of an antenna corresponding to the radio frequency unit includes: determining the parameter of the radio frequency unit based on the adjustment reference value, and sending the determined parameter of the radio frequency unit to the radio frequency unit; and/or determining, based on the adjustment reference value, the parameter of the antenna corresponding to the radio frequency unit, and sending, to the radio frequency unit, the determined parameter of the antenna corresponding to the radio frequency unit.

According to a fourth aspect, an embodiment of this application provides a method for ensuring operation reliability of a radio frequency unit. The method may be performed by the radio frequency unit or a module (for example, a chip) used in the radio frequency unit. The method includes: determining an adjustment reference value based on state information of the radio frequency unit, where the adjustment reference value is an adjustment proportion or an adjustment amount, and the state information includes at least one of CPU usage of the radio frequency unit, a temperature of the radio frequency unit, and temperature difference information of the radio frequency unit; sending the adjustment reference value to a distributed unit; and receiving, from the distributed unit, a parameter of the radio frequency unit and/or a parameter of an antenna corresponding to the radio frequency unit, where the parameter of the radio frequency unit is determined based on the adjustment reference value, and the parameter of the antenna corresponding to the radio frequency unit is determined based on the adjustment reference value.

According to the foregoing solution, the radio frequency unit sends the adjustment reference value to the distributed unit, so that the distributed unit may dynamically adjust the parameter of the radio frequency unit based on the adjustment reference value, to ensure normal operation of the radio frequency unit. This helps avoid occurrence of excessively heavy load, an excessively high temperature, and an excessively large temperature difference, so that data discarding is not caused. Therefore, operation reliability of the radio frequency unit can be ensured without affecting quality of service.

In a possible implementation method, the determining an adjustment reference value based on state information of the radio frequency unit includes: if the state information satisfies a preset condition, determining the adjustment reference value based on the state information of the radio frequency unit.

In a possible implementation method, the preset condition includes one or more of the following: The CPU usage is greater than a CPU usage threshold, the temperature is greater than a temperature threshold, and a temperature difference corresponding to the temperature difference information is greater than a temperature difference threshold.

In a possible implementation method, the method further includes: sending indication information to the distributed unit, where the indication information indicates to adjust the parameter of the radio frequency unit and/or the parameter of the antenna corresponding to the radio frequency unit.

According to a fifth aspect, an embodiment of this application provides a communication apparatus. The apparatus may be a distributed unit or a module (for example, a chip) used in a distributed unit. The apparatus has functions of implementing any implementation method according to the first aspect or the third aspect. The functions may be implemented by hardware, or may be implemented by hardware executing corresponding software. The hardware or the software includes one or more modules corresponding to the foregoing functions.

According to a sixth aspect, an embodiment of this application provides a communication apparatus. The apparatus may be a radio frequency unit or a module (for example, a chip) used in a radio frequency unit. The apparatus has functions of implementing any implementation method according to the second aspect or the fourth aspect. The functions may be implemented by hardware, or may be implemented by hardware executing corresponding software. The hardware or the software includes one or more modules corresponding to the foregoing functions.

According to a seventh aspect, an embodiment of this application provides a communication apparatus, including a processor coupled to a memory. The processor is configured to invoke a program stored in the memory, to perform any implementation method according to the first aspect to the fourth aspect. The memory may be located inside or outside the apparatus. In addition, there may be one or more processors.

According to an eighth aspect, an embodiment of this application provides a communication apparatus, including a processor and a memory. The memory is configured to store computer instructions. When the apparatus runs, the processor executes the computer instructions stored in the memory, so that the apparatus performs any implementation method according to the first aspect to the fourth aspect.

According to a ninth aspect, an embodiment of this application provides a communication apparatus, including units or means (means) configured to perform steps of any implementation method according to the first aspect to the fourth aspect.

According to a tenth aspect, an embodiment of this application provides a communication apparatus, including a processor and an interface circuit. The processor is configured to communicate with another apparatus through the interface circuit, and perform any implementation method according to the first aspect to the fourth aspect. There are one or more processors.

According to an eleventh aspect, an embodiment of this application further provides a chip system, including: a processor, configured to perform any implementation method according to the first aspect to the fourth aspect.

According to a twelfth aspect, an embodiment of this application further provides a computer-readable storage medium. The computer-readable storage medium stores instructions. When the instructions are run on a communication apparatus, any implementation method according to the first aspect to the fourth aspect is performed.

According to a thirteenth aspect, an embodiment of this application further provides a computer program product. The computer program product includes a computer program or instructions. When the computer program or the instructions are run by a communication apparatus, any implementation method according to the first aspect to the fourth aspect is performed.

According to a fourteenth aspect, an embodiment of this application further provides a communication system, including a distributed unit configured to perform any implementation method according to the first aspect, and a radio frequency unit configured to perform any implementation method according to the second aspect.

According to a fifteenth aspect, an embodiment of this application further provides a communication system, including a distributed unit configured to perform any implementation method according to the third aspect, and a radio frequency unit configured to perform any implementation method according to the fourth aspect.

### BRIEF DESCRIPTION OF DRAWINGS

FIG. 1 is a schematic diagram of a communication system to which an embodiment of this application is applicable;
FIG. 2 is a schematic flowchart of a method for ensuring operation reliability of a radio frequency unit according to an embodiment of this application;
FIG. 3 is a schematic flowchart of a method for ensuring operation reliability of a radio frequency unit according to an embodiment of this application;
FIG. 4 is a schematic diagram of a communication apparatus according to an embodiment of this application; and
FIG. 5 is a schematic diagram of a communication apparatus according to an embodiment of this application.

### DESCRIPTION OF EMBODIMENTS

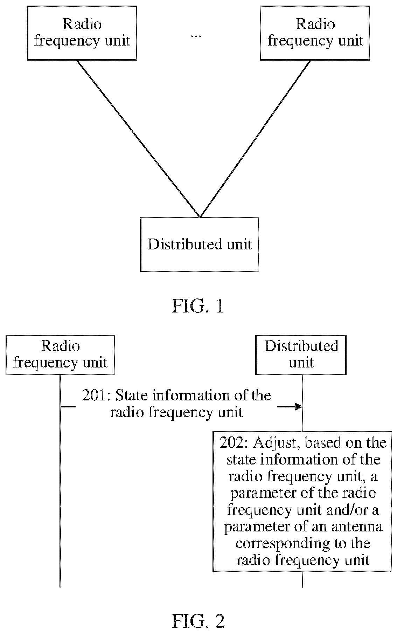

FIG. 1 is a schematic diagram of a communication system to which an embodiment of this application is applicable. The communication system shown in FIG. 1 includes a distributed unit (Distributed Unit, DU) and radio frequency units (Radio Units, RUs). One distributed unit may be connected to one or more radio frequency units. The distributed unit communicates with the radio frequency unit through a control plane interface and a user plane interface.

The distributed unit mainly processes a service that has a high requirement on real-time performance, and has functions of a radio link control (radio link control, RLC) layer, a medium access control (medium access control, MAC) layer, and a part of a physical (PHY) layer. The distributed unit may be, for example, a baseband unit (Baseband Unit, BBU).

The radio frequency unit is a radio unit having functions of a part of the PHY layer, and a size, a weight, and consumables are key factors for design of the radio frequency unit. The radio frequency unit may be, for example, an active antenna unit (Active Antenna Unit, AAU) or a remote radio unit (Radio Remote Unit, RRU).

FIG. 2 is a schematic flowchart of a method for ensuring operation reliability of a radio frequency unit according to an embodiment of this application. The method includes the following steps.

Step 201: A radio frequency unit sends state information of the radio frequency unit to a distributed unit. Correspondingly, the distributed unit receives the state information of the radio frequency unit.

The state information of the radio frequency unit indicates a current working state of the radio frequency unit. For example, the state information of the radio frequency unit includes at least one of central processing unit (central processing unit, CPU) usage of the radio frequency unit, a temperature of the radio frequency unit, and temperature difference information of the radio frequency unit.

The temperature of the radio frequency unit includes one or more of the following: an intermediate frequency temperature of the radio frequency unit, a radio frequency temperature of the radio frequency unit, or a power amplification temperature of the radio frequency unit. The intermediate frequency temperature is an internal working temperature of an intermediate frequency module in the radio frequency unit, the radio frequency temperature is an internal working temperature of a radio frequency module in the radio frequency unit, and the power amplification temperature is an internal working temperature of the power amplification module in the radio frequency unit.

The temperature difference information of the radio frequency unit indicates a maximum temperature difference of the radio frequency unit in a period of time. The maximum temperature difference may be one or more of a maximum intermediate frequency temperature difference, a maximum radio frequency temperature difference, or a maximum power amplification temperature difference. The temperature difference information may be represented by the maximum temperature difference, or may be represented by a maximum temperature and a minimum temperature.

Before step 201, the radio frequency unit further needs to obtain the state information of the radio frequency unit. For example, the radio frequency unit obtains the state information of the radio frequency unit from a local device or module, for example, obtains a temperature from a temperature sensor. Alternatively, the radio frequency unit obtains the state information of the radio frequency unit from an external monitoring unit.

Step 202: The distributed unit adjusts, based on the state information of the radio frequency unit, a parameter of the radio frequency unit and/or a parameter of an antenna corresponding to the radio frequency unit.

During specific implementation, that the distributed unit adjusts a parameter of the radio frequency unit based on the state information of the radio frequency unit may be: The distributed unit determines the parameter of the radio frequency unit based on the state information of the radio frequency unit, and sends the determined parameter of the radio frequency unit to the radio frequency unit. That the distributed unit adjusts, based on the state information of the radio frequency unit, a parameter of an antenna corresponding to the radio frequency unit may be: The distributed unit determines, based on the state information of the radio frequency unit, the parameter of the antenna corresponding to the radio frequency unit, and sends, to the radio frequency unit, the determined parameter of the antenna corresponding to the radio frequency unit.

According to the foregoing solution, the distributed unit may dynamically adjust the parameter of the radio frequency unit based on the state information of the radio frequency unit, to ensure normal operation of the radio frequency unit. This helps avoid occurrence of excessively heavy load, an excessively high temperature, and an excessively large temperature difference, so that data discarding is not caused. Therefore, operation reliability of the radio frequency unit can be ensured without affecting quality of service.

In an implementation method, when the state information of the radio frequency unit satisfies a preset condition, the distributed unit is triggered to adjust, based on the state information of the radio frequency unit, the parameter of the radio frequency unit and/or the parameter of the antenna corresponding to the radio frequency unit. The preset condition herein includes but is not limited to one or more of the following: The CPU usage of the radio frequency unit is greater than a CPU usage threshold, the temperature of the radio frequency unit is greater than a temperature threshold, and a temperature difference corresponding to the temperature difference information of the radio frequency unit is greater than a temperature difference threshold. The CPU usage threshold, the temperature threshold, and the temperature difference threshold may be preset on the distributed unit, or may be sent by the radio frequency unit to the distributed unit. This is not limited in this embodiment of this application.

The preset condition herein is determined based on information included in the state information of the radio frequency unit. For example, if the state information of the radio frequency unit received by the distributed unit includes the CPU usage of the radio frequency unit, the preset condition herein includes that the CPU usage of the radio frequency unit is greater than the CPU usage threshold. For another example, if the state information of the radio frequency unit received by the distributed unit includes the temperature of the radio frequency unit, the preset condition herein includes that the temperature of the radio frequency unit is greater than the temperature threshold. For still another example, if the state information of the radio frequency unit received by the distributed unit includes the temperature difference information of the radio frequency unit, the preset condition herein includes that the temperature difference corresponding to the temperature difference information of the radio frequency unit is greater than the temperature difference threshold. For yet another example, if the state information of the radio frequency unit received by the distributed unit includes the CPU usage of the radio frequency unit and the temperature of the radio frequency unit, the preset condition herein includes at least one of the following: The CPU usage of the radio frequency unit is greater than the CPU usage threshold, and the temperature of the radio frequency unit is greater than the temperature threshold. For still yet another example, if the state information of the radio frequency unit received by the distributed unit includes the CPU usage of the radio frequency unit and the temperature difference information of the radio frequency unit, the preset condition herein includes at least one of the following: The CPU usage of the radio frequency unit is greater than the CPU usage threshold, and the temperature difference corresponding to the temperature difference information of the radio frequency unit is greater than the temperature difference threshold. For a further example, if the state information of the radio frequency unit received by the distributed unit includes the temperature of the radio frequency unit and the temperature difference information of the radio frequency unit, the preset condition herein includes at least one of the following: The temperature of the radio frequency unit is greater than the temperature threshold, and the temperature difference corresponding to the temperature difference information of the radio frequency unit is greater than the temperature difference threshold. For a still further example, if the state information of the radio frequency unit received by the distributed unit includes the CPU usage of the radio frequency unit, the temperature of the radio frequency unit, and the temperature difference information of the radio frequency unit, the preset condition herein includes at least one of the following: The CPU usage of the radio frequency unit is greater than the CPU usage threshold, the temperature of the radio frequency unit is greater than the temperature threshold, and the temperature difference corresponding to the temperature difference information of the radio frequency unit is greater than the temperature difference threshold.

In an implementation method for adjusting the parameter of the radio frequency unit by the distributed unit, the distributed unit may reduce a quantity of resource blocks of the radio frequency unit. For example, the distributed unit may reduce the quantity of resource blocks of the radio frequency unit based on a specified step or a specified proportion. For another example, the distributed unit may alternatively determine a reduction amount of the resource blocks based on a difference between the CPU usage of the radio frequency unit and the CPU usage threshold, and reduce the quantity of resource blocks of the radio frequency unit based on the reduction amount of the resource blocks. For still another example, the distributed unit may alternatively determine a reduction amount of the resource blocks based on a difference between the temperature of the radio frequency unit and the temperature threshold, and reduce the quantity of resource blocks of the radio frequency unit based on the reduction amount of the resource blocks. For yet another example, the distributed unit may alternatively determine a reduction amount of the resource blocks based on a difference between the temperature difference corresponding to the temperature difference information of the radio frequency unit and the temperature difference threshold, and reduce the quantity of resource blocks of the radio frequency unit based on the reduction amount of the resource blocks.

In an implementation method for adjusting the parameter of the radio frequency unit by the distributed unit, the distributed unit may reduce transmit power of a power amplification module of the radio frequency unit. For example, the distributed unit may reduce the transmit power of the power amplification module of the radio frequency unit based on a specified step or a specified proportion. For another example, the distributed unit may alternatively determine a reduction amount of the transmit power of the power amplification module of the radio frequency unit based on a difference between the CPU usage of the radio frequency unit and the CPU usage threshold, and reduce the transmit power of the power amplification module of the radio frequency unit based on the reduction amount of the transmit power of the power amplification module of the radio frequency unit. For still another example, the distributed unit may alternatively determine a reduction amount of the transmit power of the power amplification module of the radio frequency unit based on a difference between the temperature of the radio frequency unit and the temperature threshold, and reduce the transmit power of the power amplification module of the radio frequency unit based on the reduction amount of the transmit power of the power amplification module of the radio frequency unit. For yet another example, the distributed unit may alternatively determine a reduction amount of the transmit power of the power amplification module of the radio frequency unit based on a difference between the temperature difference corresponding to the temperature difference information of the radio frequency unit and the temperature difference threshold, and reduce the transmit power of the power amplification module of the radio frequency unit based on the reduction amount of the transmit power of the power amplification module of the radio frequency unit.

In an implementation method for adjusting, by the distributed unit, the parameter of the antenna corresponding to the radio unit, the distributed unit may adjust a weight value of the antenna. An adjusted weight value of the antenna is used for reducing transmit power of a power amplification module corresponding to the antenna. For example, the distributed unit may reduce the weight value of the antenna based on a specified step or a specified proportion. For another example, the distributed unit may alternatively determine a reduction amount of the weight value based on a difference between the CPU usage of the radio frequency unit and the CPU usage threshold, and reduce the weight value of the antenna based on the reduction amount of the weight value. For still another example, the distributed unit may alternatively determine a reduction amount of the weight value based on a difference between the temperature of the radio frequency unit and the temperature threshold, and reduce the weight value of the antenna based on the reduction amount of the weight value. For yet another example, the distributed unit may alternatively determine a reduction amount of the weight value based on a difference between the temperature difference corresponding to the temperature difference information of the radio frequency unit and the temperature difference threshold, and reduce the weight value of the antenna based on the reduction amount of the weight value. If the weight value of the antenna is reduced, the transmit power of the power amplification module corresponding to the antenna in the radio frequency unit is reduced. For example, if a weight value of an antenna 1 is reduced by the distributed unit, transmit power of a power amplification module corresponding to the antenna 1 in the radio frequency unit is reduced. For another example, if a weight values of each antenna is reduced, transmit power of each power amplification module in the radio frequency unit is reduced.

In an implementation method, before step 202, the radio frequency unit may further send indication information to the distributed unit. The indication information indicates to adjust the parameter of the radio frequency unit and/or the parameter of the antenna corresponding to the radio frequency unit. The indication information triggers the distributed unit to perform the foregoing step 202. For example, the distributed unit is connected to five radio frequency units, and the five radio frequency units each send respective state information to the distributed unit, but three radio frequency units send the indication information to the distributed unit. In this case, the distributed unit may perform the foregoing step 202 only for the three radio frequency units, and may not perform the foregoing step 202 for the other two radio frequency units that do not send the indication information. Alternatively, the distributed unit may perform priority sorting on the plurality of radio frequency units based on whether the indication information is sent, and perform step 202 on the plurality of radio frequency units separately based on the priority sorting and a processing capability of the distributed unit. According to this method, a calculation amount of the distributed unit can be reduced, and load can be reduced.

It should be noted that, the foregoing solutions describe how to adjust the parameter of the radio frequency unit and/or the parameter of the antenna corresponding to the radio frequency unit, to reduce load, the temperature, and/or the temperature difference of the radio frequency unit. Correspondingly, when determining, based on the state information of the radio frequency unit, that the load of the radio frequency unit is light, the temperature of the radio frequency unit is low, and/or the temperature difference of the radio frequency unit is small, the distributed unit may adjust the parameter of the radio frequency unit and/or the parameter of the antenna corresponding to the radio frequency unit, to increase the load of the radio frequency unit. That the load of the radio frequency unit is light may mean that the CPU usage of the radio frequency unit is less than a first threshold, where the first threshold herein is less than or equal to the CPU usage threshold. That the temperature of the radio frequency unit is low may mean that the temperature of the radio frequency unit is less than a second threshold, where the second threshold herein is less than or equal to the temperature threshold, and the temperature herein may be at least one of the intermediate frequency temperature, the radio frequency temperature, or the power amplification temperature of the radio frequency unit. That the temperature difference of the radio frequency unit is small may mean that a maximum temperature difference of the radio frequency unit in a period of time is less than a third threshold, where the third threshold herein is less than or equal to the temperature difference threshold. The adjusting the parameter of the radio frequency unit includes increasing a resource amount of the radio frequency unit and/or increasing the transmit power of the power amplification module of the radio frequency unit. The adjusting the parameter of the antenna corresponding to the radio frequency unit includes increasing the weight value of the antenna, to increase the transmit power of the power amplification module corresponding to the antenna in the radio frequency unit. Alternatively, the distributed unit may increase a resource amount of the radio frequency unit and/or increase the transmit power of the power amplification module of the radio frequency unit by adjusting the parameter of the radio frequency unit and/or the parameter of the antenna corresponding to the radio frequency unit in a period of time after this step is executed. An implementation process of increasing the load of the radio frequency unit is an opposite process of reducing the load of the radio frequency unit. Therefore, for specific implementation details, refer to the related descriptions of reducing the load of the radio frequency unit.

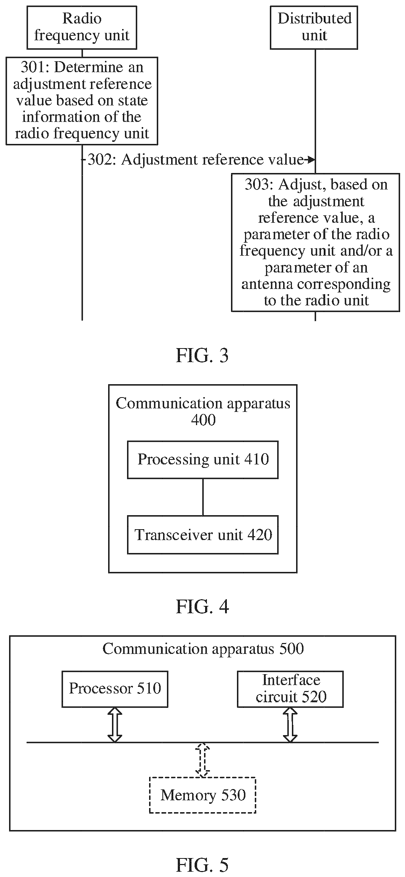

FIG. 3 is a schematic flowchart of a method for ensuring operation reliability of a radio frequency unit according to an embodiment of this application. The method includes the following steps.

Step 301: The radio frequency unit determines an adjustment reference value based on state information of the radio frequency unit.

The adjustment reference value is an adjustment proportion or an adjustment amount. The adjustment amount is an absolute value of the adjustment value. For example, if a power adjustment proportion is 10%, current power is reduced by 10%. If the adjustment amount is 2 decibels, current power is reduced by 2 decibels.

For the state information of the radio frequency unit and a manner of obtaining the state information of the radio frequency unit, refer to the descriptions of the foregoing step 201. Details are not described herein again.

In an implementation method, when the state information of the radio frequency unit satisfies a preset condition, the radio frequency unit determines the adjustment reference value based on the state information of the radio frequency unit. The preset condition herein includes but is not limited to one or more of the following: CPU usage of the radio frequency unit is greater than a CPU usage threshold, a temperature of the radio frequency unit is greater than a temperature threshold, and a temperature difference corresponding to temperature difference information of the radio frequency unit is greater than a temperature difference threshold. The CPU usage threshold, the temperature threshold, and the temperature difference threshold may be preset on the radio frequency unit, or may be sent by a distributed unit to the radio frequency unit. This is not limited in this embodiment of this application.

In an implementation method, the radio frequency unit may determine the adjustment reference value based on a difference between the CPU usage of the radio frequency unit and the CPU usage threshold. Alternatively, the radio frequency unit may determine the adjustment reference value based on a difference between the temperature of the radio frequency unit and the temperature threshold. Alternatively, the radio frequency unit may determine the adjustment reference value based on a difference between the temperature difference corresponding to the temperature difference information of the radio frequency unit and the temperature difference threshold.

Step 302: The radio frequency unit sends the adjustment reference value to the distributed unit. Correspondingly, the distributed unit receives the adjustment reference value.

Step 303: The distributed unit adjusts, based on the adjustment reference value, a parameter of the radio frequency unit and/or a parameter of an antenna corresponding to the radio frequency unit.

During specific implementation, in a method for adjusting the parameter of the radio frequency unit by the distributed unit based on the adjustment reference value, the distributed unit determines the parameter of the radio frequency unit based on the adjustment reference value, and sends the determined parameter of the radio frequency unit to the radio frequency unit. In a method for adjusting, by the distributed unit based on the adjustment reference value, the parameter of the antenna corresponding to the radio frequency unit, the distributed unit determines, based on the adjustment reference value, the parameter of the antenna corresponding to the radio frequency unit, and sends, to the radio frequency unit, the determined parameter of the antenna corresponding to the radio frequency unit.

According to the foregoing solution, the distributed unit may dynamically adjust the parameter of the radio frequency unit based on the adjustment reference value, to ensure normal operation of the radio frequency unit. This helps avoid occurrence of excessively load, an excessively high temperature, and an excessively large temperature difference, so that data discarding is not caused. Therefore, operation reliability of the radio frequency unit can be ensured without affecting quality of service.

In the method for adjusting the parameter of the radio frequency unit by the distributed unit, the distributed unit reduces a quantity of resource blocks of the radio frequency unit based on the adjustment reference value, and/or reduces transmit power of a power amplification module of the radio frequency unit based on the adjustment reference value.

In the method for adjusting, by the distributed unit, the parameter of the antenna corresponding to the radio frequency unit, the distributed unit adjusts a weight value of the antenna based on the adjustment reference value. An adjusted weight value of the antenna is used for reducing transmit power of a power amplification module corresponding to the antenna.

In an implementation method, in step 302, the radio frequency unit may further send indication information to the distributed unit. The indication information indicates to adjust the parameter of the radio frequency unit and/or the parameter of the antenna corresponding to the radio frequency unit. The indication information triggers the distributed unit to perform the foregoing step 303. Alternatively, if the radio frequency unit does not send the indication information to the distributed unit, but sends only the adjustment reference value, the adjustment reference value may further indicate to adjust the parameter of the radio frequency unit and/or the parameter of the antenna corresponding to the radio frequency unit.

It should be noted that, the foregoing solutions describe how to adjust the parameter of the radio frequency unit and/or the parameter of the antenna corresponding to the radio frequency unit, to reduce load, the temperature, and/or the temperature difference of the radio frequency unit. Correspondingly, when determining that the load of the radio frequency unit is light, the temperature of the radio frequency unit is low, and/or the temperature difference of the radio frequency unit is small, the radio frequency unit may notify the distributed unit to adjust the parameter of the radio frequency unit and/or the parameter of the antenna corresponding to the radio frequency unit, to increase the load of the radio frequency unit. The adjusting the parameter of the radio frequency unit includes increasing a resource amount of the radio frequency unit and/or increasing the transmit power of the power amplification module of the radio frequency unit. The adjusting the parameter of the antenna corresponding to the radio frequency unit includes increasing the weight value of the antenna, to increase the transmit power of the power amplification module corresponding to the antenna in the radio frequency unit. Alternatively, the distributed unit may increase a resource amount of the radio frequency unit and/or increase the transmit power of the power amplification module of the radio frequency unit by adjusting the parameter of the radio frequency unit and/or the parameter of the antenna corresponding to the radio frequency unit in a period of time after this step is executed. An implementation process of increasing the load of the radio frequency unit is an opposite process of reducing the load of the radio frequency unit. Therefore, for specific implementation details, refer to the related descriptions of reducing the load of the radio frequency unit.

It may be understood that, to implement the functions in the foregoing embodiments, the distributed unit or the radio frequency unit includes corresponding hardware structures and/or software modules for performing the functions. A person skilled in the art should be easily aware that, in combination with the units and the method steps in the examples described in embodiments disclosed in this application, this application can be implemented by hardware or a combination of hardware and computer software. Whether a function is executed by hardware or hardware driven by computer software depends on particular application scenarios and design constraint conditions of the technical solutions.

FIG. 4 and FIG. 5 each are a schematic diagram of a structure of a possible communication apparatus according to an embodiment of this application. The communication apparatuses may be configured to implement functions of the distributed unit or the radio frequency unit in the foregoing method embodiments. Therefore, beneficial effects of the foregoing method embodiments can also be achieved. In embodiments of this application, the communication apparatus may be a distributed unit or a radio frequency unit, or may be a module (for example, a chip) used in a distributed unit or a radio frequency unit.

As shown in FIG. 4, a communication apparatus 400 includes a processing unit 410 and a transceiver unit 420. The communication apparatus 400 is configured to implement the functions of the distributed unit or the radio frequency unit in the foregoing method embodiments.

When the communication apparatus 400 is configured to perform an operation of the distributed unit in the embodiment in FIG. 2, the transceiver unit 420 is configured to receive state information from the radio frequency unit. The state information includes at least one of CPU usage of the radio frequency unit, a temperature of the radio frequency unit, and temperature difference information of the radio frequency unit. The processing unit 410 is configured to adjust, based on the state information, a parameter of the radio frequency unit and/or a parameter of an antenna corresponding to the radio frequency unit.

In a possible implementation method, the processing unit 410 is specifically configured to: if the state information satisfies a preset condition, adjust the parameter of the radio frequency unit and/or the parameter of the antenna corresponding to the radio frequency unit.

In a possible implementation method, the preset condition includes one or more of the following: The CPU usage is greater than a CPU usage threshold, the temperature is greater than a temperature threshold, and a temperature difference corresponding to the temperature difference information is greater than a temperature difference threshold.

In a possible implementation method, the parameter of the radio frequency unit includes a quantity of resource blocks of the radio frequency unit; and the processing unit 410 is specifically configured to reduce the quantity of resource blocks of the radio frequency unit.

In a possible implementation method, the parameter of the radio frequency unit includes transmit power of a power amplification module of the radio frequency unit; and the processing unit 410 is specifically configured to reduce the transmit power of the power amplification module of the radio frequency unit.

In a possible implementation method, the parameter of the antenna includes a weight value of the antenna; and the processing unit 410 is specifically configured to adjust the weight value of the antenna. An adjusted weight value of the antenna is used for reducing transmit power of a power amplification module corresponding to the antenna.

In a possible implementation method, the processing unit 410 is specifically configured to determine the parameter of the radio frequency unit, and send the determined parameter of the radio frequency unit to the radio frequency unit via the transceiver unit 420; and/or determine the parameter of the antenna corresponding to the radio frequency unit, and send, to the radio frequency unit, the determined parameter of the antenna corresponding to the radio frequency unit via the transceiver unit 420.

In a possible implementation method, the transceiver unit 420 is further configured to receive indication information from the radio frequency unit. The indication information indicates to adjust the parameter of the radio frequency unit and/or the parameter of the antenna corresponding to the radio frequency unit.

When the communication apparatus 400 is configured to perform an operation of the radio frequency unit in the embodiment in FIG. 2, the transceiver unit 420 is configured to: send state information of the radio frequency unit to the distributed unit, where the state information includes at least one of CPU usage of the radio frequency unit, a temperature of the radio frequency unit, and temperature difference information of the radio frequency unit; and receive, from the distributed unit, a parameter of the radio frequency unit and/or a parameter of an antenna corresponding to the radio frequency unit. The parameter of the radio frequency unit is determined based on the state information, and the parameter of the antenna corresponding to the radio frequency unit is determined based on the state information.

In a possible implementation method, the processing unit 410 is configured to obtain the state information before the transceiver unit 420 sends the state information of the radio frequency unit to the distributed unit.

In a possible implementation method, the transceiver unit 420 is further configured to send, to the distributed unit, at least one of a CPU usage threshold corresponding to the CPU usage, a temperature threshold corresponding to the temperature, or a temperature difference threshold corresponding to the temperature difference information.

In a possible implementation method, the transceiver unit 420 is further configured to send indication information to the distributed unit. The indication information indicates to adjust the parameter of the radio frequency unit and/or the parameter of the antenna corresponding to the radio frequency unit.

When the communication apparatus 400 is configured to perform an operation of the distributed unit in the embodiment in FIG. 3, the transceiver unit 420 is configured to receive an adjustment reference value from the radio frequency unit. The adjustment reference value is an adjustment proportion or an adjustment amount. The adjustment reference value is determined based on state information of the radio frequency unit. The state information includes at least one of CPU usage of the radio frequency unit, a temperature of the radio frequency unit, and temperature difference information of the radio frequency unit. The processing unit 410 is configured to adjust, based on the adjustment reference value, a parameter of the radio frequency unit and/or a parameter of an antenna corresponding to the radio frequency unit.

In a possible implementation method, the processing unit 410 is specifically configured to reduce a quantity of resource blocks of the radio frequency unit based on the adjustment reference value; and/or reduce transmit power of a power amplification module of the radio frequency unit based on the adjustment reference value.

In a possible implementation method, the processing unit 410 is specifically configured to adjust a weight value of the antenna based on the adjustment reference value. An adjusted weight value of the antenna is used for reducing transmit power of a power amplification module corresponding to the antenna.

In a possible implementation method, the transceiver unit 420 is further configured to receive indication information from the radio frequency unit. The indication information indicates to adjust the parameter of the radio frequency unit and/or the parameter of the antenna corresponding to the radio frequency unit.

In a possible implementation method, the processing unit 410 is specifically configured to determine the parameter of the radio frequency unit based on the adjustment reference value, and send the determined parameter of the radio frequency unit to the radio frequency unit via the transceiver unit 420; and/or determine, based on the adjustment reference value, the parameter of the antenna corresponding to the radio frequency unit, and send, to the radio frequency unit via the transceiver unit 420, the determined parameter of the antenna corresponding to the radio frequency unit.

When the communication apparatus 400 is configured to perform an operation of the radio frequency unit in the embodiment in FIG. 3, the processing unit 410 is configured to determine an adjustment reference value based on state information of the radio frequency unit. The adjustment reference value is an adjustment proportion or an adjustment amount. The state information includes at least one of CPU usage of the radio frequency unit, a temperature of the radio frequency unit, and temperature difference information of the radio frequency unit. The transceiver unit 420 is configured to: send the adjustment reference value to the distributed unit; and receive, from the distributed unit, a parameter of the radio frequency unit and/or a parameter of an antenna corresponding to the radio frequency unit. The parameter of the radio frequency unit is determined based on the adjustment reference value, and the parameter of the antenna corresponding to the radio frequency unit is determined based on the adjustment reference value.

In a possible implementation method, the processing unit 410 is specifically configured to: if the state information satisfies a preset condition, determine the adjustment reference value based on the state information of the radio frequency unit.

In a possible implementation method, the preset condition includes one or more of the following: The CPU usage is greater than a CPU usage threshold, the temperature is greater than a temperature threshold, and a temperature difference corresponding to the temperature difference information is greater than a temperature difference threshold.

In a possible implementation method, the transceiver unit 420 is further configured to send indication information to the distributed unit. The indication information indicates to adjust the parameter of the radio frequency unit and/or the parameter of the antenna corresponding to the radio frequency unit.

For more detailed descriptions about the processing unit 410 and the transceiver unit 420, directly refer to related descriptions in the foregoing method embodiments. Details are not described herein again.

As shown in FIG. 5, a communication apparatus 500 includes a processor 510 and an interface circuit 520. The processor 510 and the interface circuit 520 are coupled to each other. It may be understood that the interface circuit 520 may be a transceiver or an input/output interface. Optionally, the communication apparatus 500 may further include a memory 530, configured to store instructions executed by the processor 510, store input data for the processor 510 to run instructions, or store data generated after the processor 510 runs instructions.

When the communication apparatus 500 is configured to implement the method embodiment in FIG. 2 or FIG. 3, the processor 510 is configured to implement a function of the processing unit 410, and the interface circuit 520 is configured to implement a function of the transceiver unit 420.

The processor in this embodiment of this application may include a central processing unit, a general-purpose processor, a digital signal processor (digital signal processor, DSP), an application-specific integrated circuit (application-specific integrated circuit, ASIC), and a field programmable gate array (field programmable gate array, FPGA) or another programmable logic device, a transistor logic device, a hardware component, or any combination thereof. The general-purpose processor may be a microprocessor, or may be any conventional processor.

In an optional implementation, the processor in this embodiment of this application may include a baseband processor and a central processing unit. The baseband processor is mainly configured to process a communication protocol and communication data. The central processing unit is mainly configured to control the entire communication apparatus, execute a software program, and process data of the software program. The processor in FIG. 5 integrates functions of the baseband processor and the central processing unit. A person skilled in the art may understand that the baseband processor and the central processing unit may alternatively be processors independent of each other, and are interconnected by using a technology such as a bus. A person skilled in the art may understand that the communication apparatus may include a plurality of baseband processors to adapt to different network standards, the communication apparatus may include a plurality of central processing units to enhance a processing capability of the communication apparatus, and components of the communication apparatus may be connected by using various buses. The baseband processor may alternatively be expressed as a baseband processing circuit or a baseband processing chip. The central processing unit may alternatively be expressed as a central processing circuit or a central processing chip. The function of processing the communication protocol and the communication data may be built in the processor, or may be stored in the memory in a form of a software program, and the processor executes the software program to implement a baseband processing function.

When the foregoing communication apparatus is the chip used in the radio frequency unit, the chip of the radio frequency unit implements the functions of the radio frequency unit in the foregoing method embodiments. The chip of the radio frequency unit receives information from another module in the radio frequency unit. The information is from the distributed unit. Alternatively, the chip of the radio frequency unit sends information to another module in the radio frequency unit. The information needs to be sent to the distributed unit.

When the foregoing communication apparatus is the chip used in the distributed unit, the chip of the distributed unit implements the functions of the distributed unit in the foregoing method embodiments. The chip of the distributed unit receives information from another module in the distributed unit. The information is from the radio frequency unit. Alternatively, the chip of the distributed unit sends information to another module in the distributed unit. The information needs to be sent to the radio frequency unit.

The method steps in embodiments of this application may be implemented in a hardware manner or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an ASIC. In addition, the ASIC may be located in a base station or a terminal. Certainly, the processor and the storage medium may alternatively exist in the base station or the terminal as discrete components.

All or some of the foregoing embodiments may be implemented by software, hardware, firmware, or any combination thereof. When software is used to implement embodiments, all or some of embodiments may be implemented in a form of a computer program product. The computer program product includes one or more computer programs and instructions. When the computer programs or instructions are loaded and executed on a computer, all or some of the procedures or functions in embodiments of this application are executed. The computer may be a general-purpose computer, a dedicated computer, a computer network, a base station, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium accessible by a computer, or a data storage device, such as a server, a data center, or the like, integrating one or more usable media. The usable medium may be a magnetic medium, for example, a floppy disk, a hard disk, or a magnetic tape; an optical medium, for example, a digital video disc; or a semiconductor medium, for example, a solid-state drive. The computer-readable storage medium may be a volatile or nonvolatile storage medium, or may include a volatile storage medium and a nonvolatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" generally indicates an "or" relationship between the associated objects. In the formula of this application, the character "/" indicates a "division" relationship between the associated objects.

It may be understood that various numbers in embodiments of this application are used for differentiation for ease of description, and are not used to limit the scope of embodiments of this application. Sequence numbers of the foregoing processes do not mean execution sequences. The execution sequences of the processes should be determined based on functions and internal logic of the processes.

## Claims

1. A method for ensuring operation reliability of a radio frequency unit, comprising:
receiving state information from the radio frequency unit, wherein the state information comprises at least one of central processing unit CPU usage of the radio frequency unit, a temperature of the radio frequency unit, and temperature difference information of the radio frequency unit; and
adjusting, based on the state information, a parameter of the radio frequency unit and/or a parameter of an antenna corresponding to the radio frequency unit.

2. The method according to claim 1, wherein the adjusting, based on the state information, a parameter of the radio frequency unit and/or a parameter of an antenna corresponding to the radio frequency unit comprises:
if the state information satisfies a preset condition, adjusting the parameter of the radio frequency unit and/or the parameter of the antenna corresponding to the radio frequency unit.

3. The method according to claim 2, wherein the preset condition comprises one or more of the following:
the CPU usage is greater than a CPU usage threshold, the temperature is greater than a temperature threshold, and a temperature difference corresponding to the temperature difference information is greater than a temperature difference threshold.

4. The method according to any one of claims 1 to 3, wherein the parameter of the radio frequency unit comprises a quantity of resource blocks of the radio frequency unit; and
the adjusting a parameter of the radio frequency unit comprises:
reducing the quantity of resource blocks of the radio frequency unit.

5. The method according to any one of claims 1 to 4, wherein the parameter of the radio frequency unit comprises transmit power of a power amplification module of the radio frequency unit; and
the adjusting a parameter of the radio frequency unit comprises:
reducing the transmit power of the power amplification module of the radio frequency unit.

6. The method according to any one of claims 1 to 5, wherein the parameter of the antenna comprises a weight value of the antenna; and
the adjusting a parameter of an antenna corresponding to the radio frequency unit comprises:
adjusting the weight value of the antenna, wherein an adjusted weight value of the antenna is used for reducing transmit power of a power amplification module corresponding to the antenna.

7. The method according to any one of claims 1 to 6, wherein the adjusting a parameter of the radio frequency unit and/or a parameter of an antenna corresponding to the radio frequency unit comprises:
determining the parameter of the radio frequency unit, and sending the determined parameter of the radio frequency unit to the radio frequency unit; and/or
determining the parameter of the antenna corresponding to the radio frequency unit, and sending, to the radio frequency unit, the determined parameter of the antenna corresponding to the radio frequency unit.

8. The method according to any one of claims 1 to 7, wherein the method further comprises:
receiving indication information from the radio frequency unit, wherein the indication information indicates to adjust the parameter of the radio frequency unit and/or the parameter of the antenna corresponding to the radio frequency unit.

9. A method for ensuring operation reliability of a radio frequency unit, comprising:
sending state information of the radio frequency unit to a distributed unit, wherein the state information comprises at least one of central processing unit CPU usage of the radio frequency unit, a temperature of the radio frequency unit, and temperature difference information of the radio frequency unit; and
receiving, from the distributed unit, a parameter of the radio frequency unit and/or a parameter of an antenna corresponding to the radio frequency unit, wherein
the parameter of the radio frequency unit is determined based on the state information, and the parameter of the antenna corresponding to the radio frequency unit is determined based on the state information.

10. The method according to claim 9, wherein before the sending state information of the radio frequency unit to a distributed unit, the method further comprises:
obtaining the state information.

11. The method according to claim 9 or 10, wherein the method further comprises:
sending, to the distributed unit, at least one of a CPU usage threshold corresponding to the CPU usage, a temperature threshold corresponding to the temperature, or a temperature difference threshold corresponding to the temperature difference information.

12. The method according to any one of claims 9 to 11, wherein the method further comprises:
sending indication information to the distributed unit, wherein the indication information indicates to adjust the parameter of the radio frequency unit and/or the parameter of the antenna corresponding to the radio frequency unit.

13. A method for ensuring operation reliability of a radio frequency unit, comprising:
receiving an adjustment reference value from the radio frequency unit, wherein the adjustment reference value is an adjustment proportion or an adjustment amount, the adjustment reference value is determined based on state information of the radio frequency unit, and the state information comprises at least one of central processing unit CPU usage of the radio frequency unit, a temperature of the radio frequency unit, and temperature difference information of the radio frequency unit; and
adjusting, based on the adjustment reference value, a parameter of the radio frequency unit and/or a parameter of an antenna corresponding to the radio frequency unit.

14. The method according to claim 13, wherein the adjusting, based on the adjustment reference value, a parameter of the radio frequency unit comprises:
reducing a quantity of resource blocks of the radio frequency unit based on the adjustment reference value; and/or
reducing transmit power of a power amplification module of the radio frequency unit based on the adjustment reference value.

15. The method according to claim 13 or 14, wherein the adjusting, based on the adjustment reference value, a parameter of an antenna corresponding to the radio frequency unit comprises:
adjusting a weight value of the antenna based on the adjustment reference value, wherein an adjusted weight value of the antenna is used for reducing transmit power of a power amplification module corresponding to the antenna.

16. The method according to any one of claims 13 to 15, wherein the method further comprises:
receiving indication information from the radio frequency unit, wherein the indication information indicates to adjust the parameter of the radio frequency unit and/or the parameter of the antenna corresponding to the radio frequency unit.

17. The method according to any one of claims 13 to 16, wherein the adjusting a parameter of the radio frequency unit and/or a parameter of an antenna corresponding to the radio frequency unit comprises:
determining the parameter of the radio frequency unit based on the adjustment reference value, and sending the determined parameter of the radio frequency unit to the radio frequency unit; and/or
determining, based on the adjustment reference value, the parameter of the antenna corresponding to the radio frequency unit, and sending, to the radio frequency unit, the determined parameter of the antenna corresponding to the radio frequency unit.

18. A method for ensuring operation reliability of a radio frequency unit, comprising:
determining an adjustment reference value based on state information of the radio frequency unit, wherein the adjustment reference value is an adjustment proportion or an adjustment amount, and the state information comprises at least one of central processing unit CPU usage of the radio frequency unit, a temperature of the radio frequency unit, and temperature difference information of the radio frequency unit;
sending the adjustment reference value to a distributed unit; and
receiving, from the distributed unit, a parameter of the radio frequency unit and/or a parameter of an antenna corresponding to the radio frequency unit, wherein
the parameter of the radio frequency unit is determined based on the adjustment reference value, and the parameter of the antenna corresponding to the radio frequency unit is determined based on the adjustment reference value.

19. The method according to claim 18, wherein the determining an adjustment reference value based on state information of the radio frequency unit comprises:
if the state information satisfies a preset condition, determining the adjustment reference value based on the state information of the radio frequency unit.

20. The method according to claim 19, wherein the preset condition comprises one or more of the following:
the CPU usage is greater than a CPU usage threshold, the temperature is greater than a temperature threshold, and a temperature difference corresponding to the temperature difference information is greater than a temperature difference threshold.

21. The method according to any one of claims 18 to 20, wherein the method further comprises:
sending indication information to the distributed unit, wherein the indication information indicates to adjust the parameter of the radio frequency unit and/or the parameter of the antenna corresponding to the radio frequency unit.

22. A method for ensuring operation reliability of a radio frequency unit, comprising:
sending, by the radio frequency unit, state information of the radio frequency unit to a distributed unit, wherein the state information comprises at least one of central processing unit CPU usage of the radio frequency unit, a temperature of the radio frequency unit, and temperature difference information of the radio frequency unit; and
adjusting, by the distributed unit based on the state information, a parameter of the radio frequency unit and/or a parameter of an antenna corresponding to the radio frequency unit.

23. The method according to claim 22, wherein the adjusting, by the distributed unit based on the state information, a parameter of the radio frequency unit and/or a parameter of an antenna corresponding to the radio frequency unit comprises:
if the state information satisfies a preset condition, adjusting, by the distributed unit, the parameter of the radio frequency unit and/or the parameter of the antenna corresponding to the radio frequency unit.

24. The method according to claim 23, wherein the preset condition comprises one or more of the following:
the CPU usage is greater than a CPU usage threshold, the temperature is greater than a temperature threshold, and a temperature difference corresponding to the temperature difference information is greater than a temperature difference threshold.

25. The method according to any one of claims 22 to 24, wherein
the parameter of the radio frequency unit comprises a quantity of resource blocks of the radio frequency unit; and the adjusting, by the distributed unit, a parameter of the radio frequency unit comprises: reducing, by the distributed unit, the quantity of resource blocks of the radio frequency unit; and/or
the parameter of the radio frequency unit comprises transmit power of a power amplification module of the radio frequency unit; and the adjusting, by the distributed unit, a parameter of the radio frequency unit comprises: reducing, by the distributed unit, the transmit power of the power amplification module of the radio frequency unit; and/or
the parameter of the antenna comprises a weight value of the antenna; and the adjusting, by the distributed unit, a parameter of an antenna corresponding to the radio frequency unit comprises: adjusting, by the distributed unit, the weight value of the antenna, wherein an adjusted weight value of the antenna is used for reducing transmit power of a power amplification module corresponding to the antenna.

26. The method according to any one of claims 22 to 25, wherein the method further comprises:
sending, by the radio frequency unit, indication information to the distributed unit, wherein the indication information indicates to adjust the parameter of the radio frequency unit and/or the parameter of the antenna corresponding to the radio frequency unit.

27. A method for ensuring operation reliability of a radio frequency unit, comprising:
determining, by the radio frequency unit, an adjustment reference value based on state information of the radio frequency unit, wherein the adjustment reference value is an adjustment proportion or an adjustment amount, and the state information comprises at least one of central processing unit CPU usage of the radio frequency unit, a temperature of the radio frequency unit, and temperature difference information of the radio frequency unit;
sending, by the radio frequency unit, the adjustment reference value to a distributed unit; and
adjusting, by the distributed unit based on the adjustment reference value, a parameter of the radio frequency unit and/or a parameter of an antenna corresponding to the radio frequency unit.

28. The method according to claim 27, wherein the adjusting, by the distributed unit based on the adjustment reference value, a parameter of the radio frequency unit comprises:
reducing, by the distributed unit, a quantity of resource blocks of the radio frequency unit based on the adjustment reference value; and/or
reducing, by the distributed unit, transmit power of a power amplification module of the radio frequency unit based on the adjustment reference value.

29. The method according to claim 27 or 28, wherein the adjusting, by the distributed unit based on the adjustment reference value, a parameter of an antenna corresponding to the radio frequency unit comprises:
adjusting, by the distributed unit, a weight value of the antenna based on the adjustment reference value, wherein an adjusted weight value of the antenna is used for reducing transmit power of a power amplification module corresponding to the antenna.

30. The method according to any one of claims 27 to 29, wherein the determining, by the radio frequency unit, an adjustment reference value based on state information of the radio frequency unit comprises:
if the state information satisfies a preset condition, determining, by the radio frequency unit, the adjustment reference value based on the state information of the radio frequency unit.

31. The method according to claim 30, wherein the preset condition comprises one or more of the following:
the CPU usage is greater than a CPU usage threshold, the temperature is greater than a temperature threshold, and a temperature difference corresponding to the temperature difference information is greater than a temperature difference threshold.

32. The method according to any one of claims 27 to 31, wherein the method further comprises:
sending, by the radio frequency unit, indication information to the distributed unit, wherein the indication information indicates to adjust the parameter of the radio frequency unit and/or the parameter of the antenna corresponding to the radio frequency unit.

33. A communication apparatus, comprising a module configured to perform the method according to any one of claims 1 to 8, a module configured to perform the method according to any one of claims 9 to 12, a module configured to perform the method according to any one of claims 13 to 17, or a module configured to perform the method according to any one of claims 18 to 21.

34. A computer-readable storage medium, wherein the computer-readable storage medium stores a computer program or instructions; and when the computer program or the instructions are executed by a communication apparatus, the method according to any one of claims 1 to 32 is implemented.

35. A computer program product comprising instructions, wherein when the computer program product runs on a computer, the computer is enabled to perform the method according to any one of claims 1 to 32.

36. A communication apparatus, comprising a processor and a memory, wherein the memory stores a computer program; and when the processor reads and executes the computer program stored in the memory, the communication apparatus is enabled to implement the method according to any one of claims 1 to 32.

37. A chip, wherein the chip comprises a processor and an interface circuit, the interface circuit is coupled to the processor, and the processor is configured to run a computer program or instructions, to enable the method according to any one of claims 1 to 32 to be performed.
